# EUROPEAN PATENT SPECIFICATION

(11) **EP 2 413 496 B1**
(45) Date of publication and mention of the grant of the patent: **03.10.2018**
(21) Application number: 11460035.6
(22) Date of filing: 07.07.2011
(51) Int. Cl.: H02P 25/16

(54) **A control system of an induction alternating-curret motor rotational speed with correction of turning on of a mosfet transistor**
Steuerungssystem der Drehzahl eines Wechselstrom-Induktionsmotors mit Korrektur des Einschaltens eines MOSFET-Transistors
Système de contrôle de la vitesse de rotation d'un moteur à courant alternatif à induction avec correction de la mise en conductiond'un transistor MOS

(30) Priority: 28.07.2010 PL 39198210
(43) Date of publication of application: 01.02.2012
(73) Proprietor: TECH STEROWNIKI Spólka z o.o., Sp.k., 34-122 Wieprz (PL)
(72) Inventor: Master, Janusz, 34-120 Andrychow (PL)
(74) Representative: Rygiel, Andrzej

(56) References cited:
- EP-A1- 0 637 127
- EP-A2- 0 576 280
- US-A- 4 750 102
- US-B1- 6 384 568

## Description

The object of the invention is a control system of an induction alternating-current motor rotational speed with correction of turning on of a MOSFET transistor which is intended to reduce electromagnetic interference that occurs during operation of the induction motor in radio receivers and other equipment when they are used.

There is known from European Patent Application No. 0 576 280 A3 the method and apparatus for controlling an air conditioner with a solar cell. A DC power supply bus is used to connect a solar celi to an outdoor unit of air con-ditioners. The output voltage of each outdoor unit is so controlled as to maximize the power generation efficiency of the solar celi and the DC power supplied to the air conditioner is regulated to predetermined value.

There is known from European Patent Application No. 0 637 127 A1 the three-phase electronic inverter for variable speed motor and method of operating same. A three-phase electronic inverter for an electric induction motor can operate the latter silently without the generation of magnetorestriction noise where the voltage of the rectifier outputted to the power transis-tor bridge is controlled by a TRIAC with regulation of the angle of conduction while the power transistor are pulsed in response to the output of a micropro-cessor through level adapters constituted by oper-ational amplifiers.

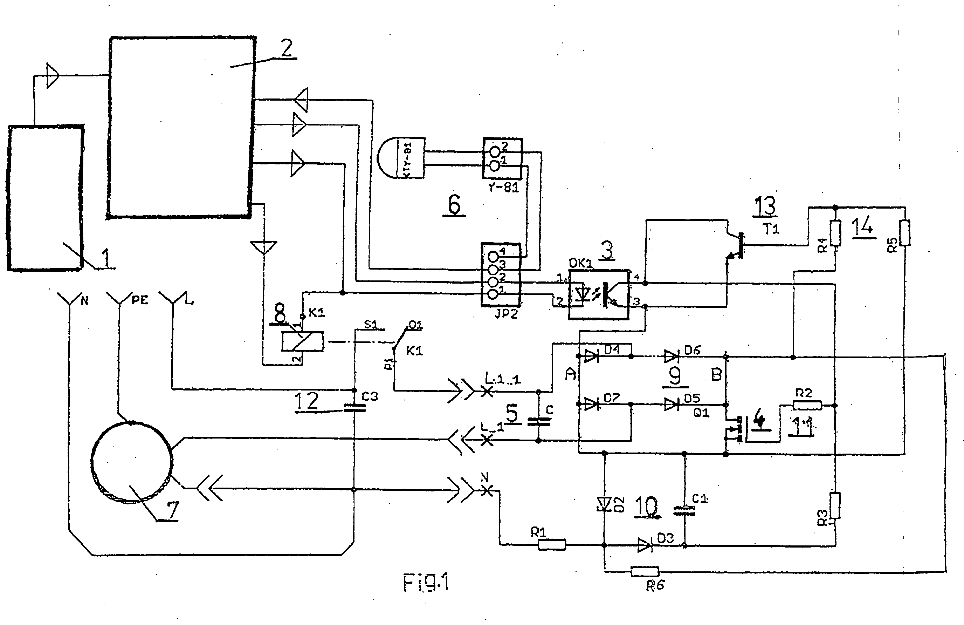

The object of the invention according to claim 1 has been shown in the drawing, where Fig. 1 shows the control system of an induction alternating-current motor rotational speed with correction of turning on of a MOSFET transistor.

The control system of an induction alternating-current motor rotational speed with correction of turning on of a MOSFET transistor according to the invention consists of the following components connected into a circuit: a signal shaping circuit **1** to form a 50 Hz signal derived from the mains voltage, a controlling microprocessor **2**, a photocoupler **3**, a MOSFET transistor **4**, a capacitor C **5**, a temperature sensor **6**, a motor **7**, a relay **8**, a bridge-rectifier **9** with diodes D4, D5, D6, and D7, a power supply **10** with resistors R1, R6, Zener diode D2, diode D3, capacitor C1, a set **11** of R2 and R3 resistors to establish the operating point of the MOSFET transistor **4**, a capacitor C3 **12**, a switching transistor T1 **13**, and resistors R4 and R5 **14**.

The benefit of such a solution is that the switching transistor T1 safely turns on, without overvoltages, the MOSFET transistor, appropriately to the inductance and the load of the induction alternating-current motor.

The control system of an induction alternating-current motor rotational speed with correction of turning on of a MOSFET transistor, according to the invention, operates as follows: the output of controlling microprocessor **2** energizes relay **8** supplying voltage through its contacts to the rotational speed control system. MOSFET transistor **4** turns on if both, photocoupler **3** and switching transistor **13** are not turned on. The supply voltage from point L1.1 propagates through diodes D6 and D7 during the positive half-period, and diodes D4 and D5 during the negative half-period to output L1 turning on motor **7,** whereas MOSFET transistor **4** is turned off if photocoupler **3** or switching transistor **13** is turned on. Capacitor C **5** discharges the self-induction voltage of motor **7** being switched off, feeding it back to the AC supply mains.

## Claims

1. A control system of an induction alternating-current motor **7** rotational speed with correction of turning on of a Mosfet transistor **4 characterised in that** it consists of a shaping circuit (**1**) of the signal 50 Hz derived from the mains voltage connected with the input of the microprocessor (**2**) and a temperature sensor (**6**) is connected with the input of the microprocessor (2) of temperature measurement, whereas output of the microprocessor **2** of the relay control is connected with the coil of relay (**8**) K1, and the other pole of the coil of relay (8) K1 is connected with the cathode of the photocoupler (**3**) OK1 diode and the input of the microprooessor (**2**), whereas the anode of the photocoupler (**3**) OK1 diode is connected with the output of the microprocessor (**2**) of rotational speed control, the pole of supply voltage L is connected with the S1 contact of the relay (**8**) K1 and with the pole of the capacitor (**12**) C3, and the other pole of the capacitor (**12**) C3 is connected with the pole N of the supply voltage *pole of the motor* (**7**) and with the resistor R1, whereas the other terminal of the resistor R1 is connected with the cathode of the Zener diode D2, the anode of the diode D3 and the resistor R6, and the cathode of the diode D3 is connected with the capacitor C1 and the resistor R3, the other pole of the capacitor C1 is connected with the anode of the Zener diode D2, the resistor R5, the source of the Mosfet transistor 4, the anodes of the diodes D4 and D7, the emitter of the photocoupler (**3**) transistor and the emitter of the transistor (**13**) T1, whereas the collector of the transistor (13) T1 is connected with the collector of the photocoupler transistor **3** OK1 and resistors R2 and R3, and the base of the transistor (**13**) T1 is connected with the resistor R4 and the other terminal of the resistor R5, and the cathode of the diode D6 is connected with the cathode of the diode D5, the drain of the Mosfet transistor 4, the other terminal of the resistor R4 and the other terminal of the resistor R6, and the anode of the diode D6 is connected with the cathode of the diode D4, the capacitor (**5**) C and the contact P1 of the relay (**8**) K1, whereas the other pole of the capacitor (**5**) C is connected with the anode of the diode D5 and the cathode of the diode D7 and the other pole of the motor (**7**).

## Patentansprüche

1. Steuerungssystem der Drehzahl eines Wechselstrom-Induktionsmotors mit Korrektur des Einschaltens eines MOSFET-Transistors **dadurch gekennzeichnet, dass** es aus dem Formungssystem (**1**) für das Signal 50 Hz aus der Netzspannung besteht, das mit einem Mikroprozessor-Eingang (**2**) verbunden ist, während der Temperatursensor (**6**) mit dem Eingang des Mikroprozessors- (**2**) der Temperaturmessung verbunden ist, während der Ausgang des Mikroprozessors (**2**) der Relaissteuerung mit der Relaisspule (**8**) /K1/ verbunden ist, und der andere Pol der Relaisspule (**8**) /K1/ mit der Kathode der Optokopplerdiode (3) /OK1/ und dem Mikroprozessor-Eingang (**2**) verbunden ist, während die Anode der Optokopplerdiode (3) /OK1/ mit dem Mikroprozessor-Ausgang 2 der Drehzahlsteuerung verbunden ist, der Versorgungsspannungspol L mit dem Kontakt S1 des Relais (8) /K1/ und mit dem Kondensatorpol verbunden ist (**12**) /C3/, der zweite Kondensatorpol (12) /C3/ hingegen mit Pol N der Versorgungsspannung des Motors (7) und mit dem Widerstand R1 verbunden ist, während der zweite Anschluss des Widerstands R1 mit der Kathode der Zener-Diode D2, der Anode der Diode D3 und dem Widerstand R6 verbunden ist, während die Kathode der Diode D3 mit dem Kondensator C1 und dem Widerstand R5, mit Source des MOSFET 4-Transistors, den Anoden der Dioden D4 und D7, dem Emitter des Transistors des Optokopplers (3) sowie mit dem Emitter des Transistors (13) /T1/ verbunden ist, während der Kollektor des Transistors (**13**) /T1/ mit dem Kollektor des Transistors des Optokopplers (3) /OK1 und mit Widerständen R2 und R3 verbunden ist, während die Basis des Transistors (1**3)** /T1/ mit dem Widerstand R4 und dem zweiten Anschluss des Widerstands R5 verbunden ist, während die Kathode der Diode D6 mit der Kathode der Diode D5, dem Drain des MOSFET 4-Transistors, dem zweiten Anschluss des Widerstands R4 und dem zweiten Anschluss des Widerstands R6 verbunden ist, während die Anode der Diode D6 mit der Kathode der Diode D4, dem Kondensator (**5**) /C/ und mit dem Kontakt P1 des Relais (**8**) /K1/ verbunden ist, während der zweite Pol des Kondensators (**5**) /C/ mit der Anode der Diode D5 und mit der Kathode der Diode D7, sowie mit dem zweiten Pol des Motors (7) verbunden ist.

## Revendications

1. Système de contrôle de la vitesse de rotation du moteur d'induction à courant alternatif avec correction de mise en marche du transistor Mosfet **caractérisé en ce qu'**il est composé du système de formation (1) du signal 50 Hz à partir de la tension de réseau lié à l'entrée du microprocesseur (**2**) et le capteur de la température (**6**) est lié à l'entrée du microprocesseur (2) de mesure de la température tandis que la sortie du microprocesseur (**2**) de contrôle du relais est liée à la bobine du relais (**8**) /K1/ et l'autre pôle du relais (**8**) /K1/ est lié à la cathode de la diode de photocoupleur (**3**) /OK1/ et à l'entrée du microprocesseur (**2**), tandis que l'anode de la diode de photocoupleur (**3**) /OK1/ est liée à la sortie du microprocesseur (**2**) de contrôle de rotation, le pôle de la tension d'alimentation L est lié au contact S1 du relais (**8**) /K1/ et au pôle du condensateur (**12**) /C3/ et l'autre pôle du compensateur (**12**) /C3/ est lié au pôle N de la tension d'alimentation du moteur (**7**) et à la résistance R1 tandis que la deuxième borne de la résistance R1 est liée à la cathode de la diode Zener D2, à l'anode de la diode D3 et à la résistance R6 et la cathode de la diode D3 est liée au condensateur C1 et à la résistance R3, l'autre pôle du condensateur C1 est lié à l'anode de la diode Zener D2, à la résistance R5, à la source du transistor Mosfet 4, aux anodes de diodes D4 et D7, à l'émetteur du transistor de photocoupleur (**3**) et à l'émetteur du transistor (**13**) /T1/, tandis que le collecteur du transistor (13) /T1/ est lié au collecteur du transistor de photocoupleur (**3**) /OK1/ et aux résistances R2 et R3 et la base du transistor (**13**) /T1/ est liée à la résistance R4 et à la deuxième borne de la résistance R5 et la cathode de la diode D6 est liée à la cathode de la diode D5, au drain du transistor Mosfet 4, à la deuxième borne de la résistance R4 et à la deuxième borne de la résistance R6 et l'anode de la diode D6 est liée à la cathode de la diode D4, au condensateur (**5**) /C/ et au contact P1 du relais (**8**) /K1/ tandis que le deuxième pôle du condensateur (**5**) /C/ est lié à l'anode de la diode D5 et à la cathode de la diode D7 et au deuxième pôle du moteur (**7**).
